# EUROPÄISCHE PATENTANMELDUNG

(11) **EP 1 033 287 A2**
(43) Veröffentlichungstag der Anmeldung: **06.09.2000**
(21) Anmeldenummer: 00104337.1
(22) Anmeldetag: 02.03.2000
(51) Int. Cl.: B60R 11/02

(54) **Aufnahmevorrichtung für Handys zum Aufbau auf eine tragende Oberfläche, insbesondere Fahrzeugkonsole in einem Kraftfahrzeug**

(30) Priorität: 03.03.1999 DE 29903792 U
(71) Anmelder: Hubrig, Dietmar, 68199 Mannheim (DE)
(72) Erfinder: Hubrig, Dietmar, 68199 Mannheim (DE)
(74) Vertreter: Mierswa, Klaus, Dipl.-Ing.

(57) **Zusammenfassung**

Die Erfindung betrifft eine Aufnahmevorrichtung für Handys zum Aufbau auf eine tragende Oberfläche (3), insbesondere Fahrzeugkonsole in einem Kraftfahrzeug. Mit Hilfe zweier parallel angeordneter Schienen (7) ist ein Schlitten (4) in Längsrichtung verschiebbar geführt, wobei der Schlitten eine Drehscheibe (5) trägt, an der z.B. mittels eines Adapters (12,13) das Handy lösbar befestigt ist. Mit Hilfe der einer erfindungsgemäßen Aufnahmevorrichtung können Position und die winkelmäßige Ausrichtung des Handys im Hinblick auf Zugänglichkeit, Bedienbarkeit und Ablesbarkeit des Handys sowie auf die akustische Verständlichkeit der übertragenen Worte verbessert und optimiert werden. Spezielle Ausgestaltungen der Erfindung können zum Einbau in spezielle Kfz-Typen vorgesehen sein.

## Beschreibung

Die Erfindung betrifft eine Aufnahmevorrichtung für Handys zum Aufbau auf eine tragende Oberfläche, insbesondere Fahrzeugkonsole in einem Kraftfahrzeug, gemäß dem Oberbegriff des Anspruchs 1.

Handys werden zunehmend als Autotelefon benutzt, wozu sie an geeigneter Stelle im Fahrzeuginnern gut zugänglich für den Fahrer zu positionieren sind. Das Armaturenbrett und insbesondere die Fahrzeugkonsolen sind allerdings bereits meist Träger für Schalter, Regler und Anzeigevorrichtungen, die eine optimale Anbringung einer Handy-Aufnahmevorrichtung kaum zulassen.

Der Erfindung liegt die Aufgabe zugrunde, eine Aufnahmevorrichtung für Handys für eine tragende Oberfläche, insbesondere Fahrzeugkonsole eines Kraftfahrzeugs, zu schaffen, die den Zugang zu vorhandenen Betätigungs- oder Anzeigeinstrumenten nicht behindert und deren Benutzung den Fahrer beim Telefonieren während des Fahrens nicht ablenkt.

Diese Aufgabe wird erfindungsgemäß bei einer Aufnahmevorrichtung der eingangs genannten Gattung dadurch gelöst, daß die Aufnahmevorrichtung eine gegenüber der tragenden Oberfläche linear verschiebbar geführte und um eine Drehachse drehbare Basis aufweist, an der das Handy lösbar angeordnet ist.

Bei einer zweckmäßigen Ausgestaltung der Erfindung ist vorgesehen, daß die Basis die Grundplatte einer Drehscheibe und einen Schlitten aufweist, wobei der Schlitten zwischen zwei parallelen, auf der Fahrzeugkonsole zu befestigenden Schienen geführt, die Drehscheibe auf dem Schlitten um eine Drehachse rotierbar angeordnet und die Grundplatte starr auf der Drehscheibe befestigt ist.

Die Schienen, durch die der Schlitten geführt ist, stellen die lineare Verfahrbarkeit des Handys sicher, so daß evtl. durch das Handy verdeckte Schalter auf der Konsole freigegeben werden kann, während die Drehscheibe ein Schwenken des Handys ermöglicht, so daß einerseits die durch das Handy verdeckte Konsolenfläche verringert wird und andererseits das Handy bediengerecht in Richtung zum Fahrer oder zum Beifahrer verdreht werden kann.

Die Grundplatte dient als Koppelelement für das Handy, das direkt oder mit Hilfe von Aufnahmeschalen auf der Grundplatte befestigt werden kann. Hierzu können die Grundplatte und eine das Handy umgebende Schale zueinander keilförmig ausgebildete Formgebungen besitzen, die zusammen eine wirksame Steckverbindung bilden.

Um eine für die verschiedensten Bauformen von Handys universell geeignete Aufnahmevorrichtung bereitstellen zu können, ist das jeweilige Handy in einem Adapter eingesetzt, der durch die bereits genannten Schalen bildbar ist.

Bevorzugt werden eine Unterschale und eine Oberschale verwendet, wobei die Oberschale das spezifische Adaptionsmittel für das jeweilige Handy ist. Die Unterschale stellt mit einem entsprechenden keilförmigen Koppelmittel, das mit der Grundplatte korrespondierende Gegenstück dar. Das Handy kann bei Bedarf, je nach Ausführungstyp, aus der Schale oder zusammen mit einem oder beiden Schalenteilen aus der Aufnahmevorrichtung herausgenommen werden.

Ein besonderes Merkmal der erfindungsgemäßen Aufnahmevorrichtung besteht ferner darin, daß die Drehscheibe die Schienen in Richtung des Handys überragt, so daß die darauf angeordneten Handy- bzw. Vorrichtungsteile frei geschwenkt werden können. Um eine sichere Verbindung der Aufnahmevorrichtung mit der Konsole sicherzustellen, sind die Schienen an ihren freien Enden in jeweils einer Endkappe aufgenommen, wobei sich die Endkappen zur Konsolenverbindung eignen. Weitere zweckmäßige Ausgestaltungen der Erfindung sind in den Unteransprüchen angegeben.

Kurzbeschreibung der Zeichnung, in der zeigen:
- Figur 1: eine perspektivische Darstellung der auf einer Fahrzeug-konsole befestigten Aufnahmevorrichtung,
- Figur 2: eine Seitenansicht der Aufnahmevorrichtung,
- Figur 3: eine Stirnansicht der Aufnahmevorrichtung aus der in Figur 2 mit III gekennzeichneten Richtung bei durchsichtig gezeich-neter Endkappe,
- Figur 4: eine Endkappe,
- Figur 5: einen Mittelsteg,
- Figur 6: eine Draufsicht auf die Drehscheibe,
- Figur 7: eine Seitenansicht der Drehscheibe,
- Figur 8: eine Seitenansicht einer Schiene,
- Figur 9: eine Stirnansicht der Schiene,
- Figur 10: eine Draufsicht auf den Schlitten,
- Figur 11: eine Stirnansicht des Schlittens,
- Figur 12: eine Draufsicht auf die Grundplatte,
- Figur 13: eine Seitenansicht einer Aufnahmevorrichtung 1 gemäß einer bevorzugten Ausführungsform der Erfindung,
- Figur 14: eine Stirnansicht der Aufnahmevorrichtung 1 von Fig. 13,
- Figur 15: eine Draufsicht auf die Aufnahmevorrichtung 1 von Fig. 13, wobei die Grundplatte und der Adapter weggelassen und die Endkappen im Querschnitt dargestellt sind,
- Figur 16: eine Stirnansicht einer anderen Ausführungsform einer erfindungsgemäßen Aufnahmevorrichtung 1, wobei die Endkappen weggelassen sind.

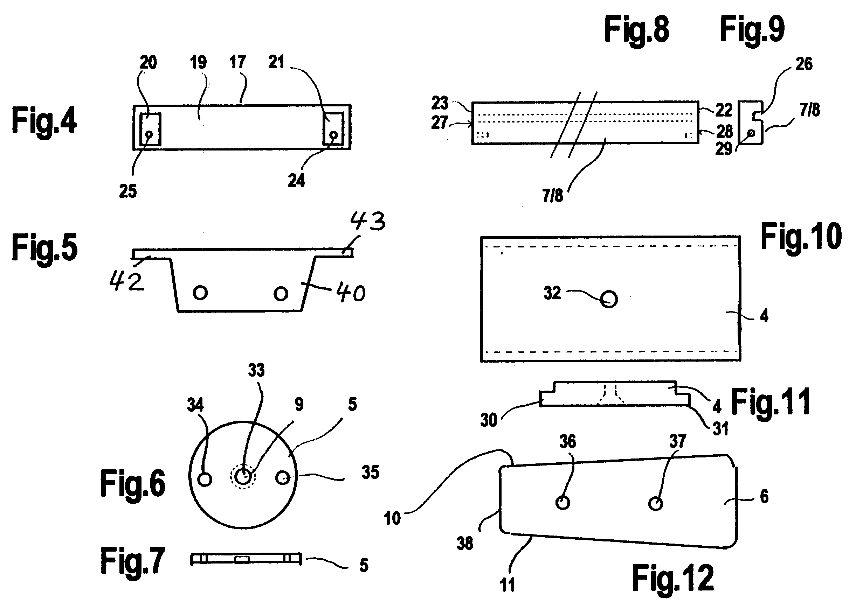

Bevorzugte Ausführungsform der Erfindung:
Zunächst werden anhand der Figuren 4-12 die Vorrichtungsteile einer bevorzugten Ausführungsform einer erfindungsgemäßen Aufnahmevorrichtung im Einzelnen erläutert.

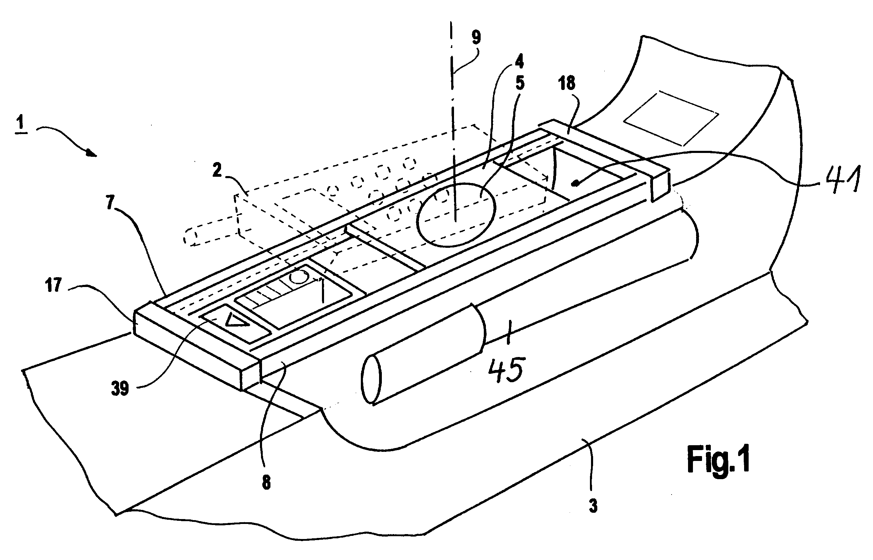

Figur 4 zeigt eine Endkappe 17. Die Endkappe 17 entspricht in Form und Größe einer weiteren Endkappe 18 (Figur 1 u.2), wie sie auch am gegenüberliegenden Ende der Schienen aufgebracht wird. Die Endkappe 17 besitzt auf ihrer den Schienen nahen Innenseite 19 an den äußeren Randseiten jeweils eine Mulde 20,21, in denen jeweils das freie Ende 22 oder 23 einer Schiene 7,8 (Figur 8) eingesetzt wird. Durch die Befestigungslöcher 24,25 hindurch werden die Schienen mit Schrauben an die Endkappe 17 angezogen und befestigt.

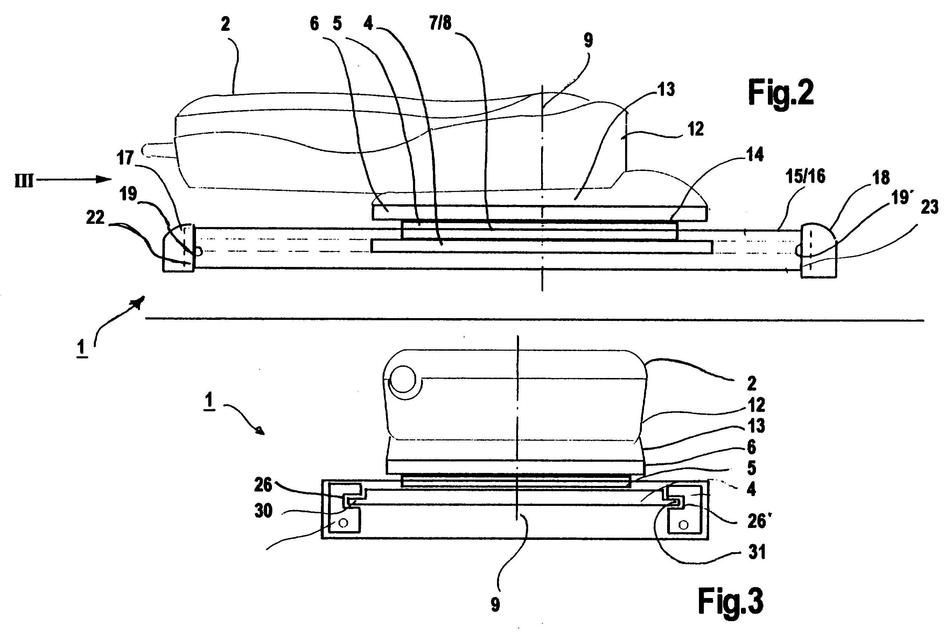

Die Schienen 7,8 gemäß Figur 8 und 9 sind hierzu bevorzugt aus einem Rechteckstab geschaffen, der in Längsrichtung eine Nut 26 aufweist. Die Schienen 7,8 sind parallel zueinander auf der Konsole so angeordnet (Figur 3), daß sich die Nuten 26,26' gegenüberliegen. In die Stirnflächen 27,28 der Schienen 7,8 ist jeweils eine Gewindebohrung 29 eingearbeitet, in die jeweils eine Schraube durch die Endkappe hindurch eingreift.

Zwischen den Schienen 7,8 ist der in Figur 10 und 11 dargestellte Schlitten 4 geführt. Der Schlitten 4 ist eine im Querschnitt T-förmige Platte, an dessen Randseiten jeweils eine Kufe 30,31 ausgeformt ist, mittels denen der Schlitten 4 in den gegenüberliegenden Nuten 26,26' der Schienen 7,8 geführt ist. Im Zentrum des Schlittens 4 ist eine Bohrung 32 angeordnet, deren Achse mit der Rotationsachse der in Fig. 6 und 7 gezeigten Drehscheibe 5 zusammenfällt. Die Drehscheibe 5 besitzt ebenfalls eine zentrale Bohrung 33, deren Achse mit der Drehachse 9 zusammenfällt. Ferner besitzt die Drehscheibe 5 zwei Befestigungslöcher 34,35, über die die Drehscheibe 5 mit der Grundplatte 6 verbunden wird.

Die Grundplatte 6 ist in Figur 12 dargestellt. Mit 36, 37 Befestigungslöcher für die Aufnahme der Drehscheibe 5 bezeichnet. Ein besonderes Merkmal der Grundplatte 6 besteht darin, daß diese Randseiten 10,11 aufweist, die nicht parallel zueinander verlaufen, so daß die Grundplatte 6 von der Form eines Trapezes ist. Ein Koppelgegenelement, das eine entsprechende trapezförmige Innenkontur besitzt, kann durch Aufschieben von der schmalen Stirnseite 38 der Grundplatte 6 aus auf dieser aufgeklemmt werden.

Die Figuren 1 - 3 zeigen die auf einer Konsole 3 eines Fahrzeugs montierte Aufnahmevorrichtung 1. Der Schlitten 4 ist zwischen zwei Schienen 7,8 so eingesetzt, daß die Kufen 30,31 in jeweils einer Nut 29,29' mit soviel Spiel zum Nutrand zu liegen kommen, daß der Schlitten noch behinderungsfrei linear parallel zu den Schienen 7,8 verschiebbar ist. Die Schienen 7,8 sind in geeigneter Weise auf der Konsole 3 befestigt und mit ihren freien Enden der Schienen sind mit den Endkappen 17,18 verschraubt. Die Drehscheibe ist auf dem Schlitten 4 frei um die Drehachse 9 rotierbar angeordnet. Auf der Drehscheibe 5 ist die Grundplatte 6 befestigt, die als Träger für eine Unterschale 13 dient, welche auf ihrer Unterseite entsprechend der Keilstumpfform der Grundplatte 6 ausgebildet ist. In der Unterschale 13 ist eine Oberschale 12 aufgenommen, in der das Handy 2 eingesetzt ist.

Das Handy 2 ist damit in der Längsrichtung der Schienen (7,8) zur einer oder anderen Konsolenseite verschiebbar, so daß bei Bedarf ein Schalter 39 freigegeben werden kann. Durch die Rotationseigenschaft der Drehscheibe 5 kann das Handy 2 auch um die Drehachse 9 gedreht werden, wozu die Oberkante 14 der Drehscheibe über die Oberkanten 15,16 der Schienen herausragt. Mit der Bezugsziffer 45 ist die Handbremse gekennzeichnet.

Die Schienen 7, 8 können auch mittels eines Mittelsteges 40 gehaltert bzw. zusätzlich gehaltert sein, der in Figur 5 gezeigt ist. Der Mittelsteg 40 wird bei entsprechend geformten Konsolen an die vordere bzw. hintere gerade Begrenzungswand des Aufnahmevolumens 41 für diverse Gegenstände angeschraubt, wobei seitliche Flansche 42, 43 des Mittelsteges 40 zur weiteren Befestigung und Halterung, vorzugsweise mittels Aufkleben oder Aufschrauben, der längs verlaufenden Schienen 7, 8 dienen, die über die Flansche 42, 43 hinweglaufen.

Im folgenden wird die Erfindung weiter erläutert, wobei insbesondere auf die Figuren 13-16 Bezug genommen wird.

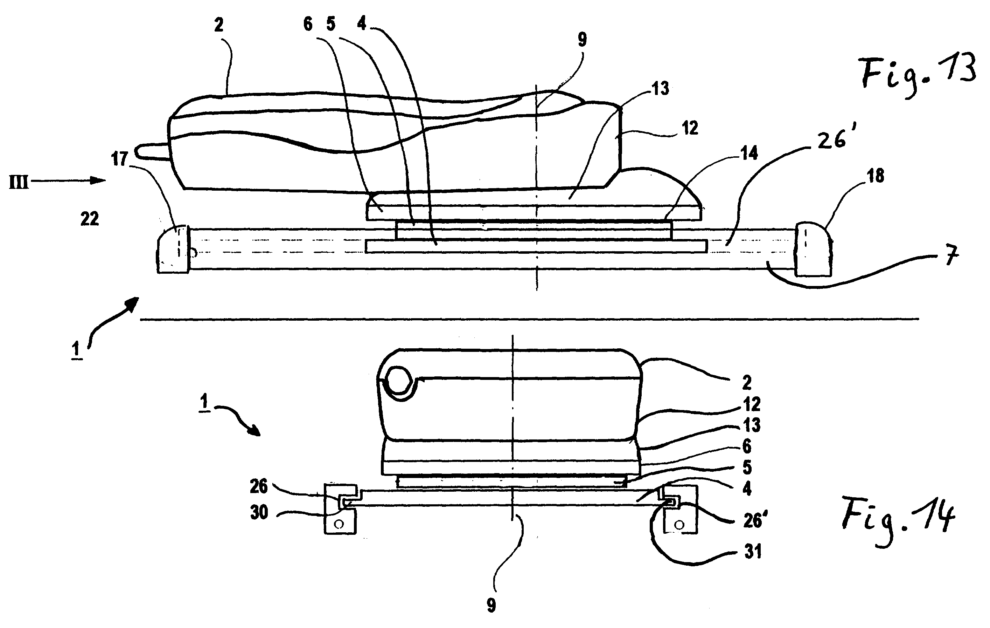

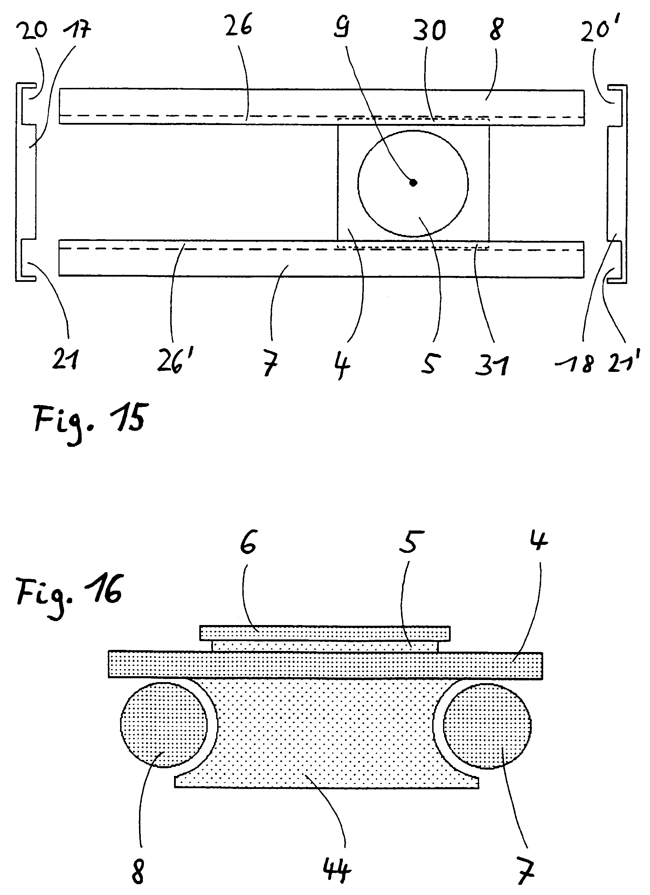

Figur 13 zeigt eine Seitenansicht einer Aufnahmevorrichtung 1 gemäß einer bevorzugten Ausführungsform der Erfindung, wobei aus Gründen der Übersichtlichkeit die erste Schiene 7 durchsichtig eingezeichnet ist. Figur 14 zeigt eine Stirnansicht der Aufnahmevorrichtung 1 von Fig. 13 aus der in Figur 13 mit III gekennzeichneten Richtung, wobei die Endkappen 17, 18 aus Gründen der Übersichtlichkeit weggelassen sind. Fig. 15 zeigt eine Draufsicht auf die Aufnahmevorrichtung 1 von Fig. 13 und 14, wobei aus Gründen der Übersichtlichkeit die Grundplatte 6 und der Adapter 12, 13 weggelassen und die Endkappen 17, 18 im Schnitt dargestellt sind. Fig. 16 zeigt eine Stirnansicht einer anderen Ausführungsform einer erfindungsgemäßen Aufnahmevorrichtung 1, wobei die Endkappen 17, 18 aus Gründen der Übersichtlichkeit weggelassen sind.

Die erste Schiene 7 und die zweite Schiene 8 verlaufen parallel zueinander und sind voneinander beabstandet so angeordnet, daß die Enden der Schienen 7,8 die Ecken eines Rechteckes bilden (Fig. 15).

Jedes Ende der ersten Schiene 7 ist mit dem ihm gegenüberliegenden Ende der zweiten Schiene 8 durch eine Endkappe 17, 18 mechanisch verbunden. In einer bevorzugten Ausführungsform der Erfindung weisen Endkappen 17, 18 an ihren Innenseiten der Querschnittform der Schienen 7, 8 entsprechend geformte Mulden 20, 20', 21, 21' auf, in die die Enden der Schienen 7, 8 eingreifen (Fig. 15). In einer bevorzugten Ausführungsform weisen die Endkappen 17, 18 Befestigungslöcher 24, 25 (Fig. 4) und die Enden der Schienen stirnseitige Gewindebohrungen 29 (Fig. 9) auf, so daß die Endkappen 17, 18 mit den in sie eingreifenden Enden der Schienen 7, 8 mittels geeigneter Schrauben verschraubbar sind.

In einer bevorzugten Ausführungsform der Erfindung sind die Schienen 7,8 jeweils von rechteckigem Profilquerschnitt (Fig. 9, Fig. 13), wobei die Innenseite der ersten Schiene 7 eine Nut 26 und die ihr gegenüber liegende Innenseite der zweiten Schiene 8 eine Nut 26' aufweisen, (Fig. 9, Fig. 13), die sich jeweils über die volle Länge der Schienen 7, 8 erstrecken.

Der Schlitten weist vorzugsweise eine rechteckige Grundfläche auf (Fig. 10, Fig. 15) und ist einer Ausführungsform der Erfindung eine Platte von der Form eines flachen Quaders, der mit einem Randbereich in die Nut 26 der ersten Schiene 7 und mit seinem gegenüber liegenden Randbereich in die Nut 26' der zweiten Schiene 8 eingreift, so daß der Schlitten 4 in Längsrichtung der Schienen 7,8 verschiebbar ist und dabei in den Nuten 26, 26' geführt wird.

In einer bevorzugten Ausführungsform der Erfindung weist der Schlitten 4 entlang seiner den Schienen 7,8 zugewandten Seiten vorspringende Kufen 30, 31 auf (Fig. 11), die in die Nuten 26, 26' eingreifen (Fig. 3), so daß der Schlitten 4 auch in dieser Ausführungsform der Erfindung in Längsrichtung der Schienen 7,8 verschiebbar ist und dabei in den Nuten 26, 26' geführt wird.

In einer anderen Ausführungsform der Erfindung sind die Schienen 7,8 jeweils von kreisförmigem Profilquerschnitt und weisen keine Nut auf (Fig. 16). In dieser Ausführungsform der Erfindung ist der Schlitten 4 mit einer Schlittenführung 44 versehen, die in Längsrichtung der Schienen 7, 8 verschiebbar zwischen diesen angeordnet ist und diese jeweils teilweise umgibt, so daß die Schlittenführung 44 durch die Schienen 7, 8 geführt ist.

Die Drehscheibe 5 (Figuren 6+7) ist in der in Fig. 3 gezeigten bevorzugten Ausführungsform der Erfindung gegenüber dem Schlitten um eine Drehachse 9 drehbar auf der Oberseite des Schlittens 4 parallel zu dieser angeordnet, wobei die Drehachse 9 durch den Mittelpunkt der Drehscheibe 5 verläuft.

In einer bevorzugten Ausführungsform der Erfindung weist die Drehscheibe 5 eine zentrale Bohrung 33 (Fig. 6) und der Schlitten 4 im Bereich des Durchstoßpunktes der Drehachse 9 eine Bohrung 32 (Fig. 10) auf. Die Bohrungen 32, 33 dienen zur Aufnahme einer Achse oder eines Drehzapfens oder einer sonstigen Einrichtung zur Herstellung einer nicht gezeigten um die Drehachse 9 drehbaren Verbindung zwischen der Drehscheibe 5 und dem Schlitten 4, wobei diese drehbare Verbindung bevorzugterweise nicht versehentlich oder unerwünscht lösbar ist.

In einer Ausführungsform der Erfindung ist die Drehscheibe 5 um den vollen Winkel von 360 Grad gegenüber dem Schlitten 4 drehbar. In einer anderen Ausführungsform der Erfindung ist der Winkel, um den die Drehscheibe 5 gegenüber dem Schlitten 4 drehbar ist, durch geeignete Mittel (nicht gezeigt) auf eine bestimmte maximale Winkelauslenkung begrenzt.

Auf der Oberseite der Drehscheibe 5 ist parallel zu dieser die Grundplatte 6 starr angebracht. Die mechanische Verbindung zwischen der Drehscheibe 5 und der Grundplatte 6 kann z.B. durch Schrauben hergestellt sein, die in exzentrische Befestigungslöcher 34, 35 in der Drehscheibe 5 (Fig. 6) und zu diesen deckungsgleich angeordnete Befestigungslöcher 36, 37 in der Grundplatte 6 (Fig. 12) eingreifen. Die durch den Schlitten 4, die Drehscheibe 5 und die Grundplatte 6 gebildete parallel zu den Schienen 7, 8 geführt verschiebbare Baugruppe wird als Basis 4,5,6 bezeichnet.

In einer Ausführungsform der Erfindung ist vorgesehen, das Handy 2 durch geeignete Befestigungsmittel unmittelbar auf der Grundplatte 6 zu befestigen. In einer bevorzugten Ausführungsform der Erfindung ist auf der Oberseite der Grundplatte 6 ein Adapter 12,13 angeordnet, der aus einer Unterschale 12 und einer Oberschale 13 besteht und eine Handyschale bildet, in der das Handy 2 starr und lösbar aufgenommen ist (Fig. 13, Fig. 14), z.B. durch Reibschluß oder durch einen entriegelbaren Schnappmechanismus.

In einer bevorzugten Ausführungsform der Erfindung ist die Grundplatte 6 trapezförmig ausgebildet (Fig. 12), wobei der Adapter 12,13 an seiner Unterseite ein zu der Trapezform der Grundplatte 6 korrespondierendes trapezförmiges auf die Grundplatte 6 in Richtung von deren kürzerer Trapezseite zu deren längerer Trapezseite so aufschiebbares Koppelteil aufweist, daß ein Reibungsschluß zwischen dem Koppelteil und der Grundplatte 6 entsteht und der Adapter 12,13 starr und durch eine dem Aufschiebevorgang entgegengesetzte Bewegung lösbar mit der Grundplatte 6 verbunden ist.

Mit Hilfe einer erfindungsgemäßen Aufnahmevorrichtung 1 kann aufgrund der Drehbarkeit der Grundplatte 6 gegenüber dem Schlitten 4 und der linearen Verschiebbarbeit der Basis ein Handy 2 z.B. in einem Kfz auch an solchen Stellen angeordnet werden, an denen dies bisher nicht sinnvoll war, da hierdurch z.B. Bedien- oder Betätigungselemente durch das Handy verdeckt worden wären. Eine erfindungsgemäße Aufnahmevorrichtung erlaubt den Zugang zu Bedien- oder Betätigungselementen, die durch das Handy verdeckt sind, da das Handy erfindungsgemäß bei Bedarf verdrehbar und/oder an eine andere Position verschiebbar ist, so daß verdeckte Bedien- oder Betätigungselemente freigegeben werden. In vielen Fällen ist die Anbringung eines Handys im Inneren z.B. eines Kfz erst durch den Einsatz einer erfindungsgemäße Aufnahmevorrichtung praktikabel.

Mit Hilfe einer an einer tragenden Oberfläche z.B. in einem Kraftfahrzeug angeordneten erfindungsgemäßen Aufnahmevorrichtung können aufgrund der Drehbarkeit der Grundplatte gegenüber dem Schlitten und der linearen Verschiebbarbeit der Basis die Position und die winkelmäßige Ausrichtung des Handys im Hinblick auf Zugänglichkeit, Bedienbarkeit und Ablesbarkeit des Handys sowie auf die akustische Verständlichkeit der übertragenen Worte verbessert und optimiert werden.

In einer Ausführungsform der Erfindung ist zwischen der Grundplatte und dem Adapter zusätzlich ein Keil (nicht gezeigt) angeordnet, so daß der Adapter und damit das Handy um einen bestimmten Winkel gegen die Grundplatte geneigt sind, was einer weiteren Optimierbarkeit der winkelmäßigen Ausrichtung des Handys dienlich sein kann.

In Bezug auf Form, Abmessungen, Art der Befestigung an der tragenden Oberfläche usw. können jeweils spezielle Ausgestaltungen der Erfindung für spezielle Kfz-Typen vorgesehen sein.

Gewerbliche Anwendbarkeit:
Die Erfindung stellt eine Aufnahmevorrichtung für Handys zum Aufbau auf eine tragende Oberfläche, insbesondere auf der Fahrzeugkonsole, wie Mittenkonsole, eines Kraftfahrzeugs, zur Verfügung, die den Zugang zu vorhandenen Betätigungs- oder Anzeigeinstrumenten nicht behindert und die insbesondere den Fahrer beim Telefonieren während des Fahrens nicht ablenkt. Vorteilhaft kann der Fahrer sich das Handy in die für ihn günstigste Position verschieben und/oder verdrehen, wobei auch ein kurzer Blickkontakt möglich ist, so dass ein optimales Freisprechen im Kraftfahrzeug, auch während des Fahrens, gewährleistet ist.

### Bezugszeichenliste:

- 1: Aufnahmevorrichtung
- 2: Handy
- 3: Konsole
- 4: Schlitten der Basis
- 5: Drehscheibe der Basis
- 6: Grundplatte der Basis
- 7, 8: erste und zweite Schiene
- 9: Drehachse
- 10, 11: Befestigungsmittel an 6 (keilförmige Seite)
- 12: Oberschale des Adapters
- 13: Unterschale des Adapters
- 14, 15, 16: Oberkante von 5 und von 6 und von 8
- 17, 18: Endkappen
- 19: Innenseite von 17, 18
- 20,20',21,21': Mulden in 17, 18
- 22, 23: freie Enden von 7/8
- 24, 25: Befestigungslöcher in 17/18
- 26, 26': Nuten in 7/8
- 27, 28: Stirnflächen von 7/8
- 29: Gewindebohrung
- 30, 31: Kufen an 4
- 32, 33: Bohrung in 4 und in 5
- 34, 35, 36, 37: Befestigungslöcher in 5 und in 6
- 38: schmale Stirnseite von 6
- 39: Schalter
- 40: Mittelsteg
- 41: Aufnahmevolumen
- 42, 43: seitliche Flansche
- 44: Schlittenführung
- 45: Handbremse

## Patentansprüche

1. Aufnahmevorrichtung für Handys zum Aufbau auf eine tragende Oberfläche, insbesondere Fahrzeugkonsole in einem Kraftfahrzeug,
dadurch gekennzeichnet,
daß die Aufnahmevorrichtung eine gegenüber der tragenden Oberfläche (3) linear verschiebbar geführte und um eine Drehachse (9) drehbare Basis (4,5,6) aufweist, auf der das Handy (2) lösbar angeordnet ist.

2. Aufnahmevorrichtung nach Anspruch 1,
dadurch gekennzeichnet,
daß die Basis (4,5,6) eine Drehscheibe (5) sowie einen Schlitten (4) umfaßt, der durch eine erste Schiene (7) und eine zweite Schiene (8), die an der tragenden Oberfläche (3) parallel voneinander beabstandet und einander gegenüberliegend angeordnet sind, linear verschiebbar geführt ist, wobei die Drehscheibe (5) um eine Drehachse (9) rotierbar an der Oberseite des Schlittens (4) und das Handy (2) lösbar an der Oberseite der Drehscheibe (5) angeordnet ist.

3. Aufnahmevorrichtung Anspruch 1 und 2,
dadurch gekennzeichnet,
daß das Handy (2) in einem Adapter (12,13) aufgenommen ist, welcher starr und lösbar an der Oberseite der Grundplatte (6) angeordnet ist.

4. Aufnahmevorrichtung nach Anspruch 1 und 2 oder 3,
dadurch gekennzeichnet,
daß an der Oberseite der Drehscheibe (5) eine Grundplatte (6) starr angebracht ist, welche als Verbindungsstück zwischen der Drehscheibe (5) und dem Handy (2) oder dem das Handy (2) aufnehmenden Adapter (12,13) dient.

5. Aufnahmevorrichtung nach Anspruch 1 , 3 und 4
dadurch gekennzeichnet,
daß die Grundplatte (6) trapezförmig ist und der Adapter (12,13) an seiner Unterseite ein zu der Trapezform der Grundplatte (6) korrespondierendes trapezförmiges auf die Grundplatte (6) in Richtung von deren kürzerer Trapezseite zu deren längerer Trapezseite so aufschiebbares Koppelteil aufweist, daß ein Reibungsschluß zwischen dem Koppelteil und der Grundplatte (6) entsteht und der Adapter (12,13) starr und durch eine dem Aufschiebevorgang entgegengesetzte Bewegung lösbar mit der Grundplatte (6) verbunden ist.

6. Aufnahmevorrichtung nach Anspruch 2,
dadurch gekennzeichnet,
daß die Ende der beiden Schienen (7,8) durch jeweils eine Endkappe (17,18) quer zu den Schienen (7,8) verbunden sind.
